Europäisches Patentamt

European Patent Office

Office européen des brevets

(11) Publication number: **0 272 892**
**A2**

(12) **EUROPEAN PATENT APPLICATION**

(21) Application number: 87311186.8

(22) Date of filing: 18.12.87

(51) Int. Cl.⁴: **F 16 C 19/10**

(30) Priority: 22.12.86 DK 6233/86

(43) Date of publication of application:
29.06.88 Bulletin 88/26

(84) Designated Contracting States:
AT BE CH DE ES FR GB GR IT LI LU NL SE

(71) Applicant: NOVENCO A/S, NORDISK VENTILATOR CO.
A/S
No. 21 Industrivej
DK-4700 Naestved (DK)

(72) Inventor: Kragh, Evan Drachmann
No. 208 Vordingborgvej
DK-4682 Tureby (DK)

(74) Representative: Westwood, Edgar Bruce et al
STEVENS, HEWLETT & PERKINS 5, Quality Court
Chancery Lane
London WC2A 1HZ (GB)

(54) A rolling bearing device for taking up axial thrust forces.

(57) The bearing device comprises two coaxially arranged thrust bearings (4, 5) which are series-connected with respect to their load, and which each has a separate frictional locking device preventing the bearing from rotating in one or the other direction of rotation, respectively. Each frictional locking device includes a set of clamping bodies (9) located between opposed first and second clamping surface portions, each of which is immovable relative to a first and a second bearing track, respectively, of the associated bearing when the bearing is subjected to an axial load. The first clamping surface portion of either locking device is provided in an element (1) which is common to both bearings and which under axial load retains one bearing track of the other bearing (5).

Each of said first clamping surface portions includes a number of first clamping surfaces having generatrices parallel to the axis of the bearing device, and each of these first clamping surfaces is located radially directly opposite and spaced from a cylindric second clamping surface oriented parallel to the axis of the bearing device and in connection with the second bearing track of the associated bearing (4, 5). One of said opposed clamping surfaces cooperating with either set of clamping bodies (9) is formed by the radially inner or outer peripheral surface of a bearing race (7) of the bearing in question.

The quoted features ensure that malfunctioning of the locking devices is avoided, and that the locking function is independent of the axial load on the bearing device.

FIG. 1

## Description

A Rolling Bearing Device for Taking Up Axial Thrust Forces.

This invention relates to a rolling bearing device for taking up axial thrust forces; comprising two coaxially arranged thrust bearings series-connected with respect to their load, each bearing having a separate frictional locking device preventing that bearing from rotating in one or the other direction of rotation, respectively. Each frictional locking device includes a set of clamping bodies located between opposed first and second clamping surface portions each of which is immovable relative to a first and a second bearing track, respectively, of the associated bearing when the bearing is subjected to axial load. The first clamping surface portion of each locking device is provided in an element which is common to both bearings and which during axial load retains one bearing track of one bearing relative to one bearing track of the other bearing.

From EP-patent specification No. 0022832 there is known a bearing device of this kind, which has made it possible to obtain a considerably increased lifetime of blade suspension bearings in an axial flow fan, because due to the locking of either of the series-connected thrust bearings against rotation in one or the other direction, respectively, even small swivelling or oscillating rotational movements of the kind normally occurring in blade suspension bearings as a result of pulses from the control system will cause the rolling elements of the non-locked bearing to be shifted to a new contact point on the race tracks. In this way the risk of deterioration of the tracks due to so-called galling is considerably reduced.

In the known embodiments according to the above-mentioned EP-patent specification the frictional locking device of each bearing comprises a clamping member, preferably in the form of a helical spring which, by exerting a lateral pressure, clamps one or the other of the two outer bearing races to a coupling member in fixed connection with those tracks of the two bearings which are adjacent to one another.

In those embodiments in which the clamping members consists of helical springs, it has however been found that there is a certain risk of malfunctioning because a helical spring which in response to a rotational movement of the bearing in one direction is tightened so as to exert said clamping action, may, during the opposed releasing movement, show a tendency towards rotating its first loosened winding to a larger diameter so that the centrifugal force may press it up above the superjacent windings.

The known helical springs employed as clamping members are pre-tensioned in order to obtain a sufficiently low hysteresis in the locking function. Then the friction within the bearing becomes relatively high during a movement opposite to the locking direction and it will also depend on the state of lubrication of the springs.

In said EP-patent specification there is also shown an embodiment in which the clamping action referred to is obtained by clamp roller clutches interposed between on the one hand clamping surface portions on an element common to both bearings and connecting the two races of the bearings which are adjacent to one another, and on the other hand the hub rim and a flange on the blade root, respectively. This embodiment has however been found less suited for industrial production because it is complicated and expensive to manufacture. Furthermore this embodiment has the disadvantage that due to the conical shape of the rollers the locking function is not independent of the axial load on the bearing device and thus the hysteresis of the locking function is dependent on the bearing load.

According to the present invention a rolling bearing device of the kind initially referred to is characterized in that each of said first clamping surface portions provided in said common element includes a number of first clamping surfaces having generatrices parallel to the axis of the bearing device; that each first clamping surface is located directly radially opposite and spaced from a cylindric second clamping surface oriented parallel to the axis of the bearing device and in connection with the second bearing track of the associated bearing; and that one of said radially opposed first and second clamping surfaces cooperating with either set of clamping bodies is formed by the radially inner or outer peripheral surface of a bearing race of the bearing in question.

By arranging the clamping bodies directly between said common element and said bearing races it has been made possible, to a large extent, to construct the bearing device from standard rolling bearing components, and because the clamping surfaces have been designed with generatrices the direction of which is parallel to the common axis of the bearing device, there can be obtained a practically hysteresis-free locking function which is independent of the axial load on the bearing. Additionally the previously mentioned friction occurring within the bearing during a movement opposite the locking direction has been practically eliminated.

Preferably the bearing device is constructed such that both bearings are standard thrust bearings having the same diameter, and that the common element is formed as a retaining ring located internally of the bearings and having a radially protrudring flange located between the adjacent bearing races of the two bearings and in contact therewith. In this way it is obtained that the bearing device has a minimal mounting diameter and that its manufacture is simple and cheap.

The invention will be described in more detail below with reference to the accompanying drawings in which

    Fig. 1 is a perspective and partly sectioned view of an embodiment of a bearing device according to the invention,

    Fig. 2 is a schematic illustration of the functioning of a frictional locking device applicable in the bearing device of Fig. 1,

Fig. 3 is a schematic view of a second embodiment of a bearing device according to the invention,

Fig. 4 is a schematic cross section through a third embodiment of a bearing device according to the invention,

Fig. 5 is a schematically shown cross section through a fourth embodiment of a bearing device according to the invention, and

Fig. 6 is a very schematic fractional view, in cross section and on a larger scale, of a frictional locking device applicable in the bearing device shown in Fig. 5.

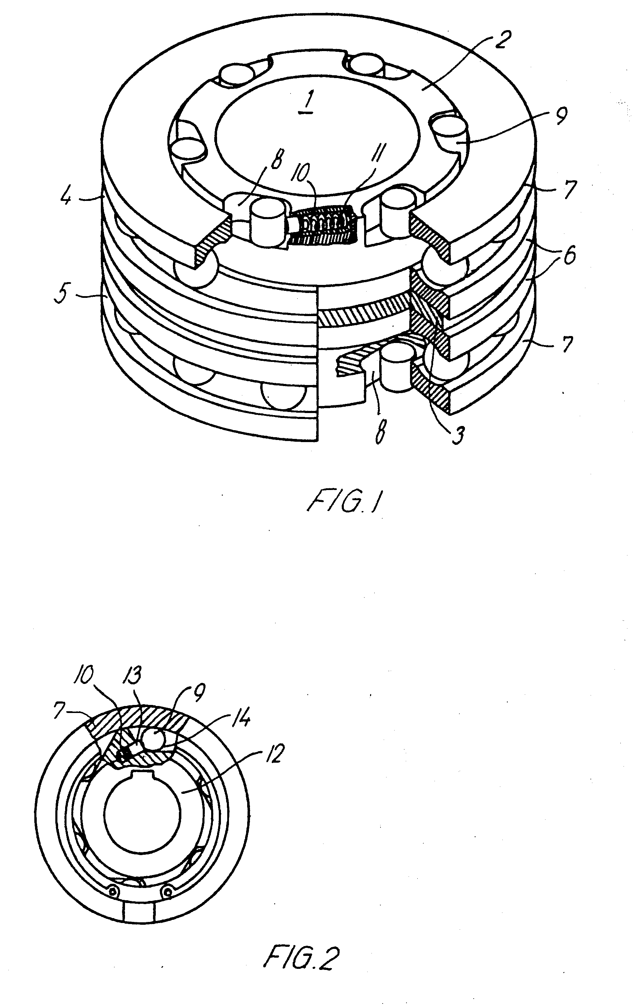

In Fig. 1 there is shown an embodiment of a rolling bearing device according to the invention comprising a common element 1 formed as a retaining ring 2 having a centrally arranged and radially protruding flange 3, and two standard thrust bearings 4, 5 of equal diameters and located on opposite sides of flange 3. The fit between retaining ring 2 and the two bearing races 6 adjacent flange 3 shall have a character such that the bearings are sufficiently centered, but it need not be a press fit which retains the bearing races 6 relative to the retaining ring because the friction resulting from the axial load on the bearing will retain them to flange 3. In regions radially opposite those two bearing races 7 which are remote from one another, the diameter of retaining ring 2 has been reduced so that there is a clearance between races 7 and retaining ring 2 in said regions which constitute clamping surface portions of ring 2.

Each thrust bearing 4, 5 is associated with a frictional locking device which includes a plurality of recesses 8 formed in the clamping surface portion of ring 2 opposite the bearing race 7. Each recess 8 houses a clamping roller 9 which is pre-loaded, by a compression spring 10 located in a bore 11 at the large end of the recess, towards the narrow end of the recess and thus outwardly towards bearing race 7. A pair of opposed clamping surfaces cooperating with each clamping roller 9 comprises the radially inner peripheral surface of race 7 which is a circular cylinder surface the generatrix of which is parallel to the axis of the bearing device, and the outer lateral surface of the recess the generatrix of which is likewise parallel to the bearing axis.

If bearing race 7 is rotated in the locking direction, i.e. relative to retaining ring 2 such that rollers 9 are shifted towards the narrow ends of the recesses, the rollers will be frictionally coupled to the opposed clamping surfaces, thereby retaining race 7. Because the rollers are operative between clamping surfaces which are parallel to the bearing axis, the locking function is independent of the axial load on the bearing and thus it is possible to provide a practically hysteresis-free locking function with a low release torque and a high brake torque. This makes this embodiment of the bearing device particularly suited for use as a blade suspension bearing in an axial flow fan in which the blade angle is adjustable during operation, because such bearings are heavily loaded in axial direction and at the same time the changes of the blade angles during operation are small.

When a fan blade is retained relative to one of the two remote bearing races 7 and a fan hub is retained to the other race 7 of the other thrust bearing, a rotation of the blade in the locking direction of one bearing will cause one set of rollers 9 to retain one bearing race 7 relative to the common element 1 which then carries out a rotation relative to the other bearing race 7 the balls of which are thus shifted to a different position along the bearing tracks of the other bearing. A rotation of the blade opposite the locking direction of one bearing will rotate one bearing race 7 relative to the common element, and the associated balls will thus be shifted to a different position along the bearing tracks of that bearing while simultaneously the other set of rollers 9 retain the other bearing race 7 relative to the common element.

By executing the locking functions as described above the balls of one bearing will be shifted substantially in one direction only and the balls of the other bearing only in the other direction when the blade carries out a swivelling movement. The risk of local attrition and fatigue failue of the bearing tracks due to compression is thus substantially reduced.

In Fig. 2 there is shown a fractional view for illustrating the frictional locking device in more detail. In each recess 14 formed in a common element 12 and having a wedge-shaped cross section there is provided a roller 9 which, via a thrust pin 13, is urged towards the narrow end of the recess and outwardly against the radially oriented clamping surface on bearing race 7 by spring 10. In order to obtain the desired blocking of the movement of bearing race 7 in the locking direction of the bearing relative to element 12 and thus relative to the associated other bearing race 6, the wedge angle of the recess and the materials employed may be designed and chosen in a manner known from frictional locking devices associated with radial bearings. Roller 9 is spring-loaded in order to ensure the locking function and to provide a low hysteresis, and the spring force is chosen such dependent on the relevant operational conditions of the bearing device, that the forces to which the locking device is subjected in use are balanced.

There may be employed other types of clamping bodies, which may either be free, spring-loaded or supported in an annular holder, such as cylindric bodies having an asymmetric cross section.

In the bearing device shown in Fig. 1 there has been used two single acting thrust bearings because with a given static load-carrying capacity these bearings permit a large internal diameter. If on the other hand a low mounting height is desired without increasing the outer diameter there may be used a double-acting thrust bearing having two bearing tracks in an intermediate race.

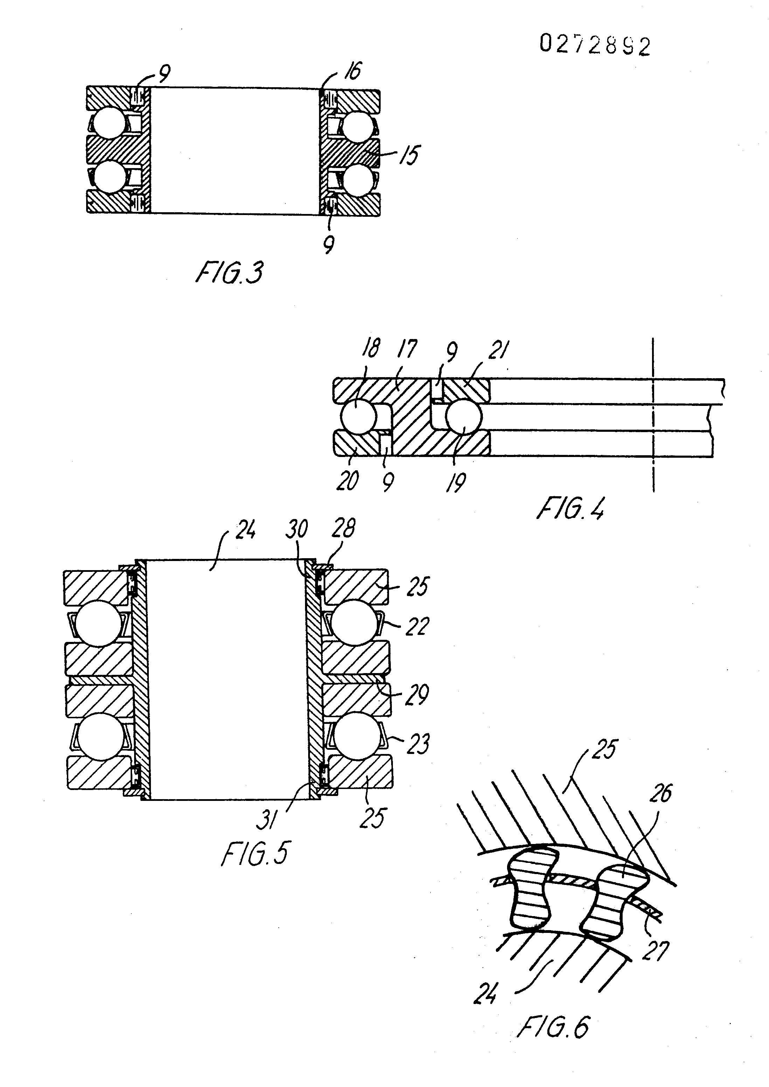

Such an embodiment has been shown in Fig. 3 in which an intermediate race 15 and a common element 16 are made as one piece which in a simple manner may be hardened to the desired hardness after being machined. Also here the clamping bodies have been shown as spring loaded rollers 9 located in recesses, but cylindric bodies with an asymmetric cross section may also be used, but in that case the clamping surfaces on element 16 would be designed as by and large circular cylindric clamping surfaces coaxial with the bearing. Alternatively the common element may comprise only the intermediate bearing race 15, in which case the clamping bodies would be operative between the radially outer edge surface of the race and a bearing housing, and between the radially inner edge surface of the race and a shaft, respectively.

In Fig. 4 there has been shown a counter-rotating bearing having a minimal mounting height and a relatively large diameter. The two axial bearings are located in the same radial plane and have different diameters. In a common element 17 there has been formed a bearing track 18 and 19, respectively, associated with either bearing and opposite those tracks each bearing has a bearing race 20 and 21, respectively, the rotation of which in the respective locking direction is prevented by clamping bodies, such as the rollers 9 which are operative between opposed clamping surfaces which are coaxial with the bearing and by and large circular cylindric. This bearing is, inter alia, well suited for supporting the arms of a windmill in a hub, because this requires a low mounting depth.

In Fig. 5 two standard axial thrust bearings 22, 2 are arranged at opposite sides of a protruding flange on a substantially circular cylindric common element 24 which at either end is formed with an end portion 30 or 31, respectively, of somewhat smaller diameter. As clamping bodies cylindric bodies of asymmetric cross section have been inserted between each of those end portions and the opposed bearing races 25.

As shown in Fig. 6 such clamping bodies 26 may be supported in a cage 27 which, if desired, may exert a preloading force on the bodies so that the locking function operates at all operational conditions. The clamping bodies may e.g. be of type FE 400 commercially available from the company Georg Müller Nürnberg GmbH or the type known from Fig. 7 of DE-P 3 245 347. The bearing races 25 remote from one another may be internally machined in order to obtain a sufficiently fine tolerance on the inner diameter and an ensuing good effect of the locking function. This may be necessary because to-day many standard bearings are manufactured so as to be retained at the outer diameter. There is also obtained the advantage that the inner diameter of the common element may be increased as compared to the embodiment of Fig. 1. A removable locking ring 28 located in the groove ensures that the clamping bodies remain in place during manipulation of the bearing.

Any of the common elements mentioned above may after machining be hardened in a known manner so that there is obtained a hardness of the material of the element which is suitable for taking up the pressure exerted by the clamping bodies. As a result larger deformations of the element are avoided and a long lifetime thereof is ensured.

It is evident that clamping bodies with asymmetric cross section may be used in all the embodiments shown, and that the invention is not limited to the use of ball bearings since any type of rolling bearings, e.g. roller bearings or needle bearings, can be used.

The bearing device according to the invention can to advantage be employed at any place where heavily loaded axial bearings are subjected to small swivelling movements which may result in "brinelling" of the bearing tracks, such as in propeller hubs, thrust bearings for rudder suspensions in ships, or steering gear suspensions in automobiles.

**Claims**

1. A rolling bearing device for taking up axial thrust forces; comprising two coaxially arranged thrust bearings (4, 5) series-connected with respect to their load, each bearing having a separate frictional locking device preventing that bearing from rotating in one or the other direction of rotation, respectively; each of said frictional locking devices including a set of clamping bodies located between opposed first and second clamping surface portions, each of which is immovable relative to a first and a second bearing track, respectively, of the associated bearing when the bearing is subjected to axial load, said first clamping surface portion being provided in an element (1; 12; 16; 17; 24) which is common to both bearings and which under axial load retains one bearing track (18, 19) of one bearing (4; 22) relative to one bearing track (18, 19) of the other bearing (5; 23), characterized in that each of said first clamping surface portions provided in said common element (1; 12; 16; 17; 24) includes a number of first clamping surfaces having generatrices parallel to the axis of the bearing device;

each first clamping surface being located radially directly opposite and spaced from a cylindric second clamping surface oriented parallel to the axis of the bearing device and in connection with the second bearing track of the associated bearing (4, 5; 22, 23);

and in that one of said radially opposed first and second clamping surfaces cooperating with either set of clamping bodies (9; 26) is formed by the radially inner or outer peripheral surface of a bearing race (7; 20; 21; 25) of the bearing in question.

2. A bearing device as claimed in claim 1, characterized in that both bearings are standard thrust bearings (4, 5; 22, 23) having the same diameter, and that the common element (1; 24) is formed as a retaining ring (2) located internally of the bearings and having a radially protruding flange (3; 29) located between the adjacent bearing races (6) of the bearings and in contact therewith.

3. A bearing device as claimed in claim 1, characterized in that the common element (16) is formed as a retaining ring located internally of the bearings and in fixed connection with an intermediate ring (15) common to both bear-

ings and having the two mutually interlocked bearing tracks formed in its opposed faces, the retaining ring and the intermediate ring being preferably made in one piece.

4. A bearing device as claimed in claim 1, characterized in that the diameters of the bearings are different, and that the common element (17) is designed for being arranged internally of one bearing and externally relative to the other bearing.

5. A bearing device as claimed in any of the preceding claims, characterized in that the clamping surfaces of the clamping surface portion of the common element are formed as lateral walls of wedge-shaped recesses (14) for accommodating said clamping bodies (9).

6. A bearing device as claimed in claim 5, characterized in that the clamping bodies are rollers (9) and are pre-loaded towards the narrowed end of each of said recesses (14) by compression springs (10) inserted in bores (11) at the opposite end of each recess.

7. A bearing device as claimed in any of claims 1-5, characterized in that each clamping surface portion on the common element is a substantially circular cylindric clamping surface coaxial with the bearing, and in that the clamping bodies are cylinder bodies (26) having an asymmetric cross section.

0272892

FIG.1

FIG.2

0272892

FIG.3

FIG.4

FIG.5

FIG.6